# EUROPÄISCHE PATENTSCHRIFT

(11) **EP 0 698 199 B1**
(45) Veröffentlichungstag und Bekanntmachung des Hinweises auf die Patenterteilung: **08.09.1999**
(21) Anmeldenummer: 95911184.0
(22) Anmeldetag: 21.03.1995
(51) Int. Cl.: F23J 15/00, B01D 53/56, B01D 53/86, B01D 53/34, B01D 53/30

(54) **VERFAHREN UND VORRICHTUNG ZUM EINBRINGEN EINES FLÜSSIGEN ODER GASFÖRMIGEN BEHANDLUNGSMEDIUMS IN EINEN RAUCHGASSTROM**
METHOD AND DEVICE FOR INTRODUCING A LIQUID OR GASEOUS TREATMENT MEDIUM INTO A FLUE GAS FLOW
PROCEDE ET DISPOSITIF D'INTRODUCTION D'UN MILIEU DE CONDITIONNEMENT EN PHASE LIQUIDE OU GAZEUSE DANS UN COURANT DE GAZ DE FUMEE

(30) Priorität: 21.03.1994 DE 4409639
(43) Veröffentlichungstag der Anmeldung: 28.02.1996
(73) Patentinhaber: SEGHERS BETTER TECHNOLOGY GROUP, 2830 Willebroek (BE)
(72) Erfinder: HÖRLER, Stefan, CH-8311 Brütten (CH); KEMTER, Andreas, D-78315 Radolfzell (DE); NIKOLAUS, Thomas, D-78476 Allensbach (DE)
(74) Vertreter: Luys, Marie-José A.H.
(86) Internationale Anmeldenummer: CH9500063
(87) Internationale Veröffentlichungsnummer: WO9525931

(56) Entgegenhaltungen:
- WO-A-91/06506
- DE-A- 3 728 557
- DE-A- 4 019 037
- DE-A- 4 027 819
- DE-A- 4 130 348
- DE-C- 3 736 306
- DE-C- 3 811 636
- DE-C- 4 027 040
- US-A- 5 326 536

## Beschreibung

Die Erfindung betrifft ein Verfahren und eine Vorrichtung zum Einbringen eines flüssigen oder gasförmigen Behandlungsmediums in einen Rauchgasstrom. Insbesondere handelt es sich hierbei um das Einbringen eines Entstickungsmediums oder eines Dioxininhibitors in den Rauchgasstrom einer Feuerungsanlage, um die bei den Verbrennungsvorgängen entstehenden Stickoxidanteile oder Dioxine im Rauchgas zu reduzieren.

In Feuerungsanlagen entstehen bekanntlich verschiedene gasförmige Verbindungen, die umwelt- bzw. gesundheitsschädlich sind und darum zu einem möglichst hohen Prozentsatz aus den Rauchgasen entfernt werden sollen. Emissionsgrenzwerte werden durch gesetzliche Vorschriften vorgegeben und dürfen in keinem Fall überschritten werden. Die nachfolgende Beschreibung bezieht sich auf Stickoxide (NO_{X}), wobei an dieser Stelle erwähnt sein soll, dass sich die allgemeine Problematik und die aufgezeigten Lösungsvorschläge auch auf die Behandlung anderer chemischer Verbindungen beziehen.

Die Rauchgasentstickung wird heute meist über eine katalytische Reduktion, also über die Aufspaltung der Stickoxide in Stickstoff und Wasserdampf unter Zugabe von Ammoniak bei Anwesenheit eines Katalysators durchgeführt. Der Ammoniak wird hierbei als "Salmiakgeist" oder in Form von festen Ammoniumverbindungen, die in Wasser gelöst sind, dem Rauchgasstrom zugeführt. Die angestrebte chemische Reaktion findet zwar über einen relativ breiten Temperaturbereich statt, jedoch ist der Reduktionsgrad nur innerhalb eines schmalen Temperaturfensters befriedigend. Es muss also darauf geachtet werden, dass die Ammoniakmoleküle mit den Stickoxidmolekülen innerhalb dieses Temperaturfensters zusammentreffen. Bei nicht optimaler Führung des Prozesses erreicht die Emission an Stickoxiden und/oder unverbrauchtem Ammoniak schnell unbefriedigende Werte. Weiterhin werden bei nicht optimaler Führung des Prozesses zu grosse Mengen an Behandlungsmedium verbraucht. Schliesslich sinkt auch der thermische Wirkungsgrad der Feuerungsanlage durch übergrosse Mengen von zugeführtem Behandlungsmedium, insbesondere durch übergrosse Mengen von zugeführtem Wasser. in welchem die eigentlich wirksamen Substanzen gelöst sind.

Aus der DE 41 39 862 Al ist ein Verfahren zur Regelung der Eingabemenge eines Behandlungsmediums zur Rauchgasentstickung bekannt, bei welchem die Zugabe des Behandlungsmediums in Abhängigkeit des Ammoniak-Schlupfes, womit die Konzentration von Ammoniak im Abgas gemeint ist, unter weiterer Berücksichtigung des Stickoxidgehaltes im Abgas geregelt wird. Je nach Art der so geregelten Feuerungsanlage sind recht gute Ergebnisse erzielbar, jedoch hat sich insbesondere bei grösseren Feuerungsanlagen mit entsprechend grösseren Rauchgaskanälen gezeigt, dass Verbesserungen notwendig sind.

Aus der DE 39 35 400 C1 ist ein Verfahren zum Einbringen eines Behandlungsmediums in einen Rauchgasstrom bekannt, das sich ebenfalls auf die Rauchgasentstickung bezieht. Gemäss diesem bekannten Verfahren wird nur an denjenigen Stellen Behandlungsmedium in die Rauchgase eingedüst, an welchen mittels eines optischen Sensors festgestellt wird, dass gerade keine Flamme vorhanden ist, weil man erkannt hat, dass die eingespritzten Chemikalien immer dort zerstört wurden, wo gerade eine Flamme in den Strömungsraum hinaufzüngelte. Auch dieses Verfahren zeigt jedoch keine vollständig befriedigenden Ergebnisse.

Um eine optimierte Zuführung von Behandlungsmedium zu gewährleisten, wird in der DE 39 35 401 A1 und in der DE 39 35 402 A1 eine besondere Form von Düsen vorgeschlagen, über die das Behandlungsmedium in den Rauchgaskanal eingedüst werden soll. In diesen Druckschriften wird jeweils vorgeschlagen, das Mischen der eigentlich wirksamen Substanz mit der Trägersubstanz (Wasser) möglichst nahe an der Düsenöffnung vorzunehmen. Auch hierdurch sind jedoch keine optimalen Ergebnisse erzielbar.

Aus der DE-A-4 130 348 ist ein Verfahren bekanntgeworden, bei dem der Strömungsraum in eine dreidimensionale Matrix von Teil-Strömungsräumen aufgeteilt ist, denen dann jeweils eine Düse und Messmittel zur Ermittlung der Temperatur in diesem jeweiligen Teil-Strömungsraum zugeordnet sind. Die Düsen sind permanent dem Rauchgasstrom ausgesetzt. Für jede einzelne Düse wird laufend ein individueller Teil-Stellwert von Wirksubstanz errechnet, wobei die Summe der individuellen Teil-Stellwerte den Gesamt-Stellwert an Wirksubstanz nicht überschreitet.

Die WO-A-9'106'506 offenbart ein System zur effizienten Reduktion von Stickoxiden NOx und anderen Schadstoffen wie zum Beispiel Kohlenmonoxid CO oder Ammoniak NH₃ in einem Rauchgasstrom. Das wird erreicht, indem über eine Mehrzahl von Injektoren auf verschiedenen Höhen im Rauchgasstrom verschiedene Behandlungsmedien eingespritzt werden, wobei auf jedem Niveau mehrere Injektoren angeordnet sein können. Jeder Injektor kann selbst eine Mehrzahl von Injektoren bedeuten. Es wird wenigstens eine Temperatur an wenigstens einem Ort gemessen, und dann wird auch wenigstens der NOₓ-Gehalt an wenigstens einer Stelle gemessen. Das gleiche gilt für die Sauerstoffkonzentration, die CO-Konzentration und die Ammoniak-Konzentration an mindestens einem Ort. Diese sämtlichen Werte können also an mehreren Orten gemessen werden. Je nach Ergebnis wird dann gezielt an jedem Ort das richtige Behandlungsmedium in richtiger Menge eingespritzt. Die Temperatur wird als wichtigster Parameter dargestellt. Es ist auch eine mehrstufige Injektion vorgesehen, wobei nach jeder Einspritzung das nächstfolgende Behandlungsmedium auf das zuvor erzielte Ergebnis eingestellt wird.

Schliesslich ist in der DE-C-40 27 040 ein Verfahren offenbart, wonach durch einen Zyklus, der durchlaufen wird, einerseits die optimalen Eindüsstellen ermittelt werden und andrerseits die Reduktionsmittelverteilung bestimmt wird. Auf verschiedenen Ebenen können mehrere Einspritzdüsen angordnet sein. Dann werden verschiedene Lanzen auf verschiedenen Ebenen betätigt. Mittels zyklischen Durchlaufens verschiedener Einstellungen wird an eine optimale Einstell-Konstellation herangefahren.

Diese bekannten Verfahren sind entweder wegen mangelnder Feinanpassung an die Charakteristika des Rauchgasstromes zu wenig wirksam oder aber recht aufwendig. Der Erfindung liegt deshalb die Aufgabe zugrunde, einerseits ein Verfahren der eingangs genannten Art dahingehend weiterzubilden, sodass verbesserte Emissionswerte bei gleichzeitig verbessertem Heiz-Wirkungsgrad mit vertretbarem Aufwand erzielbar sind, sowie andrerseits eine entsprechende Vorrichtung zur Ausübung des Verfahrens anzugeben.

Diese Aufgabe wird durch die im Patentanspruch 1 angegebenen Merkmale verfahrensmässig und durch die im Anspruch 6 angegebenen Merkmale vorrichtungsmässig gelöst.

Die Erfindung geht von der Erkenntnis aus, dass es von kardinaler Bedeutung ist. dass das Behandlungsmedium in der richtigen Konzentration mit einer Wirksubstanz aufdotiert nur an denjenigen Stellen im Strömungsraum eingespritzt wird, an welchen das Rauchgas die dafür notwendigen Kriterien aufweist. Grundsätzlich ist der Rauchgasstrom stark inhomogen. Das heisst, über den Querschnitt zur Strömungsrichtung gesehen weist er unterschiedliche Temperaturen und unterschiedliche Strömungsgeschwindigkeiten auf. Zum Beispiel kann die Temperatur etwa in der Mitte am grössten sein, während sie gegen den Rand des Strömungsraumes hin abfällt - oder aber die Temperatur erreicht zum Beispiel in einer angehobenen Ecke ihren Spitzenwert. Weiter kann zum Beispiel die Strömungsgeschwindigkeit auf der einen Seite des Strömungsraumes sowie gegen die Mitte hin bedeutend grösser sein als auf der anderen Seite des Strömungsraumes. Manchmal kann man sogar feststellen, dass auf der einen Seite des Strömungsraums negative Geschwindigkeiten auftreten, das heisst, die Rauchgase bilden eine Walze. Man hat also eine deutliche Abweichung von einer laminaren Strömung und entsprechend treten Turbulenzen auf. Betrachtet man die im Strömungsraum verlaufenden Isothermen, so bilden diese im Innern des Strömungsraumes zum Beispiel eine Kuppel- oder Glockenform, wobei diese Form deformiert und also auch asymmetrisch sein kann. In anderen Fällen wieder ermittelt man eine Sattel form, oder die Form eines an einer Ecke hochgezogenen Tuches, usw. usf. Die geometrische Form der Einhüllenden aller Punkte, welche im idealen Temperaturfenster liegen, ist in jedem Fall ein dreidimensionales Gebilde, das auch in Strömungsrichtung eine gewisse Ausdehnung hat. Das hängt vorallem mit den verteilt über den Strömungsraum-Querschnitt unterschiedlichen Strömungs-Geschwindigkeiten zusammen. Entsprechend befinden sich auch die Temperaturfenster, bei welchen die Einspritzung des Behandlungsmediums erfolgen sollte, längs einer solchen dreidimensionalen geometrischen Form. Es ist also nicht so, dass die Punkte innerhalb des idealen Temperaturfensters im Strömungsraum im wesentlichen einen quer durch diesen verlaufenden etwa ebenen Abschnitt bilden, und dass dieser etwa ebene Abschnitt im Strömungsraum je nach den Verbrennungsbedingungen bloss auf- und abwärts wandert. Es macht den Anschein, dass die bisherigen Verfahren auf dieser Prämisse abstellten und entsprechend wurde immer auf einer bestimmten Ebene im Strömungsraum eingespritzt, wobei zwischen zwei oder drei verschiedenen Ebenen gewählt werden kann. Die Erfindung wendet sich von dem ab und geht von der Erkenntnis aus, dass die Punkte innerhalb eines idealen Temperaturfensters geometrisch innerhalb eines dreidimensionalen Gebildes liegen, nämlich zum Beispiel innerhalb einer Glockenform, Kuppelform oder einer anderen beliebigen dreidimensionalen Form. Erfindungsgemäss unterteilt man deshalb den Strömungsraum des Rauchgases in eine dreidimensionale Matrix von Teil-Strömungsräumen. Jedem so gebildeten Teil-Strömungsraum ist jeweils eine Düse zugeordnet, die dann entsprechend den momentanen Verhältnissen insbesondere in bezug auf Strömung und/oder Temperatur mehr oder weniger an Wirksubstanz im Behandlungsmedium zuführt. Sowohl die Bedarfsmenge an Wirksubstanz wie auch der Einspritzort kann mit dieser Düsenanordnung und Einspritzregelung viel feiner an die geometrische Form der Einhüllenden der Punkte innerhalb des idealen Temperaturfensters angepasst werden. Uebergreifend, also ähnlich einer Kaskadenregelung, werden der Ammoniak-Schlupf und/oder der Reststickoxidgehalt des Abgases überwacht, sodass die Gesamtmenge an zugeführtem Behandlungsmedium dementsprechend geregelt werden kann.

Ueberraschenderweise hat es sich gezeigt, dass durch diese Vorgehensweise erhebliche Verbesserungen gegenüber den bisher bekannten Verfahren erzielbar sind. Insbesondere wird durch die Erfindung eine optimale örtliche Eindüsung erzielt, da jede Düse einzeln auf örtliche Temperaturschwankungen oder die dort vorherrschende Strömung reagiert. Damit reagiert das gesamte System wesentlich dynamischer, feinfühliger und schneller auf Temperaturschwankungen als dies bisher der Fall war. Hierdurch wiederum wird eine erhebliche Erhöhung des Entstickungsgrades bei verminderter Behandlungsmedienzufuhr erzielt.

Vorzugsweise wird in Strömungsrichtung gesehen der Strömungsraum in mindestens zwei Gruppen von hintereinanderliegenden Teil-Strömungsräumen unterteilt. Dadurch kann bei sich zum Beispiel erhöhender Strömungsgeschwindigkeit und damit einer Verschiebung von höheren Temperaturen in Richtung fort von der Feuerungsstelle das optimale Temperaturfenster leichter ausgenützt werden. Vorzugsweise werden die Teil-Strömungsräume im wesentlichen gleichgross gebildet. Dies ergibt eine Vereinfachung hinsichtlich der benötigten Düsen sowie der dazugehörigen Regelungen, da nur eine "Grössenordnung" von beiden benötigt wird. Die Teil-Strömungsräume werden jeweils an mindestens einer Wand des Strömungskanals angrenzend gewählt. Dadurch kann mit Düsen gearbeitet werden, die nur wenig in den Strömungsraum hineinragen. Es werden zusätzlich zu den Temperaturmesswerten auch Rauchgas-Strömungswerte, das heisst die Strömungsgeschwindigkeiten, ermittelt. Diese werden bei der Gewinnung der repräsentativen Messwerte, anhand derer die Regelung geschieht, berücksichtigt. Mit Berücksichtigung dieses weiteren Parameters lässt sich eine weitere Steigerung der Entstickungseffizienz erzielen. Man bringt nur in diejenigen Teil-Strömungsräume Behandlungsmedium ein, in denen die Temperaturmesswerte innerhalb eines vorgegebenen Reaktionstemperaturfensters liegen. Liegt die Temperatur niedriger (oder höher), so wird in diese Teilströmungräume gar kein Behandlungsmedium eingebracht.

Zur Erzeugung des Behandlungsmediums wird eine der an sich bekannten Wirksubstanzen einem Trägermedium, vorzugsweise Wasser, derart in Abhängigkeit von dem zum jeweiligen Teil-Strömungsraum gehörigen Teilstellwert zugemischt, dass der aus einer Düse ausströmende Volumenstrom im wesentlichen konstant und unabhängig vom Teilstellwert ist. Dadurch lässt sich ein konstantes Zerstäubungsverhalten der Düsen besonders leicht bewerkstelligen. Man deaktiviert diejenigen Düsen, die Teilströmungsräumen zugeordnet sind, in denen die Temperaturmesswerte ausserhalb des angegebenen Temperaturfensters liegen, vollständig. Dies bedeutet, dass man nicht (wie bisher üblich) bei einer Regelung auf "0" die Wirkstoffkonzentration im Trägermedium auf "0" herunterregelt und weiterhin Trägermedium einspritzt, sondern die entsprechende Düse überhaupt nicht mehr einspritzen lässt. Dadurch lässt sich der thermische Wirkungsgrad der Feuerungsanlage erhöhen. Hierbei ist es von besonderem Vorteil, wenn die deaktivierten Düsen aus dem Strömungsraum entfernt werden. Dadurch werden Störungen an den Düsen durch Verschmutzung, Korrosion usw. vermieden.

Vorzugsweise wird den Düsen das Behandlungsmedium unter hohem Druck, vorzugsweise über 10 bar, besonders vorzugsweise über 50 bar, zugeführt. Im Gegensatz zu den eingangs zitierten, bekannten Düsen, die mit niedrigem Druck arbeiten, wird also vorgeschlagen, mit Hochdruck zu arbeiten. Dadurch lässt sich erreichen, dass bei absolut gesehen grossen Druckschwankungen von 1-3 bar das Einspritzverhalten nur geringfügig schwankt.

Die obigen Ausführungen gelten auch für die erfindungsgemässe Vorrichtung. Hierbei ist noch zu erwähnen, dass man vorzugsweise die Temperaturfühler als Differenztemperaturmessfühler ausbildet, was sich durch eine nach zwei separaten Temperaturfühlern angeordnete Subtrahierschaltung oder aber durch die Ausbildung der Temperaturmessfühler selbst bewerkstelligen lässt. In einer anderen Variante kommt ein Strahlungsenergie-Detektor zum Einsatz. Dieser ermittelt die Strahlungsenergie aus jedem der Teil-Strömungsräume, wonach sich feststellen lässt, in welchen Teil-Strömungsräumen sich das Temeperaturfenster befindet. Aus der Temperaturdifferenz zwischen zwei Messpunkten lässt sich (bei Bekanntheit weiterer Parameter) die Strömungsgeschwindigkeit der Rauchgase herleiten, sodass die eingangs genannte Regelung in Abhängigkeit von der Strömungsgeschwindigkeit und der Temperatur leicht durchführbar ist. Selbstverständlich ist es auch möglich, die Strömungsgeschwindigkeit der Rauchgase direkt zu bestimmen.

Die erfindungsgemässe Vorrichtung zur Ausübung des Verfahrens schliesst in einer Ausführung auch Düsen ein, die derart verschiebbar ausgebildet und in einer Wand des Strömungsraums gehalten sind, dass sie von einer Deaktivierungsposition ausserhalb des Rauchgasstroms in eine Aktivierungsposition innerhalb des Rauchgasstroms verschiebbar sind. Durch diese Ausgestaltung der Düsen können nämlich ganz erhebliche Vorteile erzielt werden. Eine Düse, die deaktiviert wird, also keinerlei Behandlungsmedium einspritzt, ist nämlich im Rauchgassstrom erheblichen Belastungen ausgesetzt. Insbesondere handelt es sich hierbei um das Korrodieren oder Zusetzen der Düse durch im Rauchgas mitgeschleppte Feststoffpartikel und Kondensate. Darüber hinaus wird eine Düse, die deaktiviert ist, also auch kein Trägermedium führt, heiss, sodass gesonderte Kühlmassnahmen notwendig sind. Um nun eine solche Kühlung bzw. einen solchen Schutz vor Verschmutzung sicherzustellen, bildet man die Düsen als Koaxialrohre aus und lässt im äusseren Mantel zum Beispiel Luft mitströmen. Alternativ sind auch schon Keramikdüsen vorgeschlagen worden, die höheren Belastungen standhalten. In beiden Fällen aber wird der Durchmesser einer solchen Düse so gross, dass der Abstand zwischen den üblicherweise die Wand des Strömungsraumes bildenden Flossenrohren, bzw. die Breite der Stege zwischen den Flossenrohren, nicht mehr ausreicht, um die Düsen hindurchzuführen. Man muss in diesen Fällen Ausbiegungen der Flossenrohre vorsehen, was mit ausserordentlich hohen Kosten verbunden ist und auch mechanische sowie thermische Nachteile mit sich bringt. Die hier eingesetzten Düsen können hingegen mit so niedrigen Durchmessern gefertigt werden, dass sie auch bei nahe beieinanderliegenden Flossenrohren ohne weiteres zwischen diesen hindurchpassen. Eine gesonderte Kühlung der Düsen für ihren aktiven Zustand, indem sie in den Strömungsraum ragen, ist nicht notwendig. Im deaktivierten Zustand können sie so weit zurückgezogen werden, dass eine direkte Berührung mit den Rauchgasen nicht mehr stattfindet. Darüber hinaus wird rings um die Düsen herum ein Strömungskanal vorgesehen, durch den man Luft einbläst und so jegliches Eindringen von Schmutzteilchen usw. verhindert.

Bevorzugte Ausführungsformen der Erfindung ergeben sich aus den Unteransprüchen. Nachfolgend wird die Erfindung anhand von Abbildungen näher beschrieben. Hierbei zeigt:
- Figur 1: eine schematisierte perspektivische Darstellung zur Erläuterung eines Strömungsraumes;
- Figur 2: eine Darstellung, ähnlich der nach Figur 1, zur Erläuterung der im Strömungsraum herrschenden Temperaturverhältnisse;
- Figur 3: eine Darstellung, ähnlich der Figuren 1 und 2, zur Erläuterung der Düsenanordnung und deren Betriebsweise;
- Figur 4: eine schematisierte perspektivische Darstellung zur Erläuterung des Gesamtaufbaus;
- Figur 5: ein Schaltschema zur Erläuterung der Regelkreise;
- Figur 6: eine schematisierte Schnittdarstellung zur Erläuterung einer Düse im eingebauten Zustand.

Bei der nachfolgenden Beschreibung werden für gleiche oder gleichwirkende Teile dieselben Bezugsziffern verwendet.

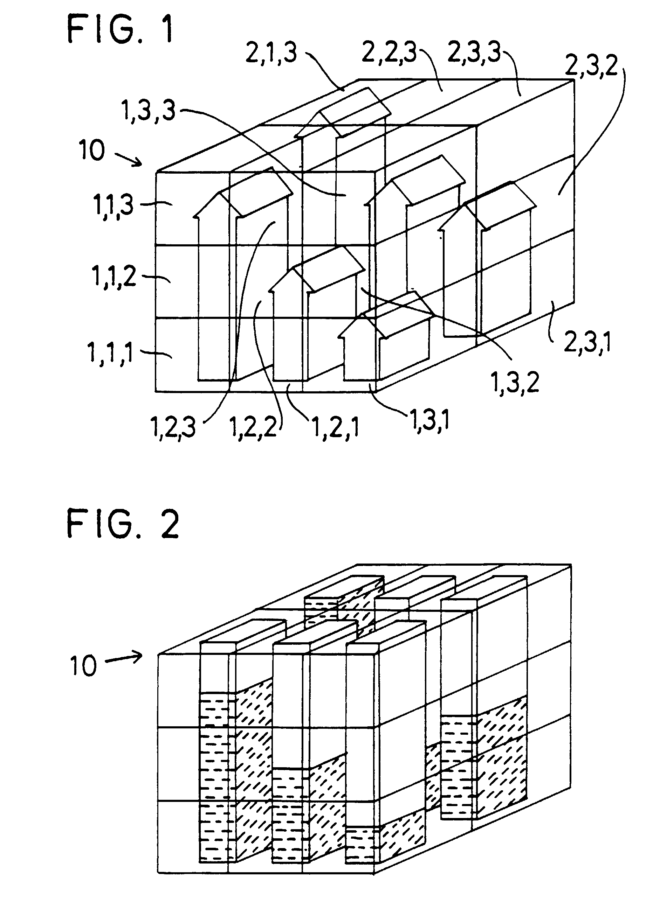

Figur 1 zeigt einen perspektivischen Ausschnitt eines Strömungsraumes 10 einer Feuerungsanlage, wobei dieser Raum - abhängig von der Art der Feuerungsanlage - im eigentlichen Feuerungsraum oder weiter von diesem entfernt in einem Rauchgaskanal angeordnet sein kann. Dieser Strömungsraum 10 wird bei dem hier gezeigten Ausführungsbeispiel in Teil-Strömungsräume 1,1,1; 1,1,2; ... 2,3,3 unterteilt. Alle diese Teil-Strömungsräume sind beim hier gezeigten Ausführungsbeispiel gleichgross und kubisch ausgebildet und bilden in ihrer Summe den gesamten Strömungsraum 10. Durch diesen Strömungsraum 10 strömen die heissen Rauchgase, wobei in Figur 1 mit den dort gezeigten (dreidimensionalen) Pfeilen die über den Querschnitt des Strömungsraumes 10 unterschiedlichen Strömungsgeschwindigkeiten (durch die Länge der Pfeile) angedeutet sind. Derartige inhomogene Strömungsverhältnisse sind insbesondere bei Müllverbrennungsanlagen festzustellen und entsprechen den Inhomogenitäten der zugeführten und zum Beispiel auf einem Feuerungsrost verteilten Brennstoffe.

In Figur 2 sind Temperaturbereiche angedeutet, wobei die strichliert angelegten Bereiche Temperaturen entsprechen, die innerhalb des vorbestimmten Temperaturfensters liegen, während die unstrichlierten Bereiche Temperaturen andeuten sollen, die ausserhalb des Temperaturfensters liegen. Das Temperaturfenster ist in an sich bekannter Weise dadurch definiert, dass beim Eindüsen eines Entstickungsmediums in die Rauchgase mit Temperaturen innerhalb des Temperaturfensters eine optimale Entstickungswirkung bei geringem Schlupf feststellbar ist.

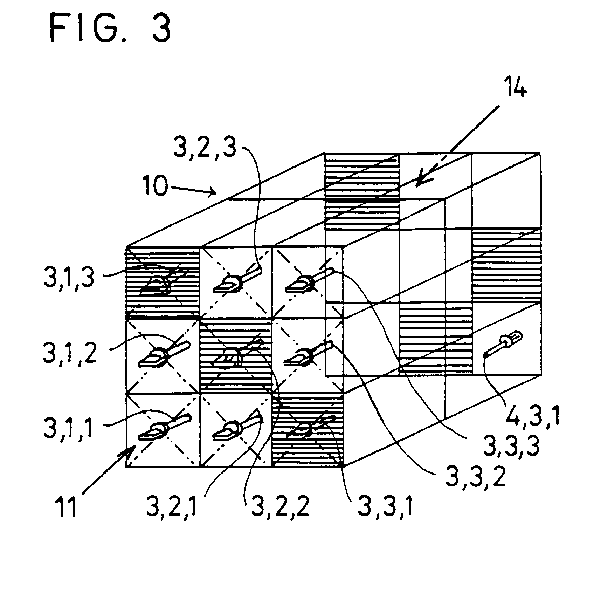

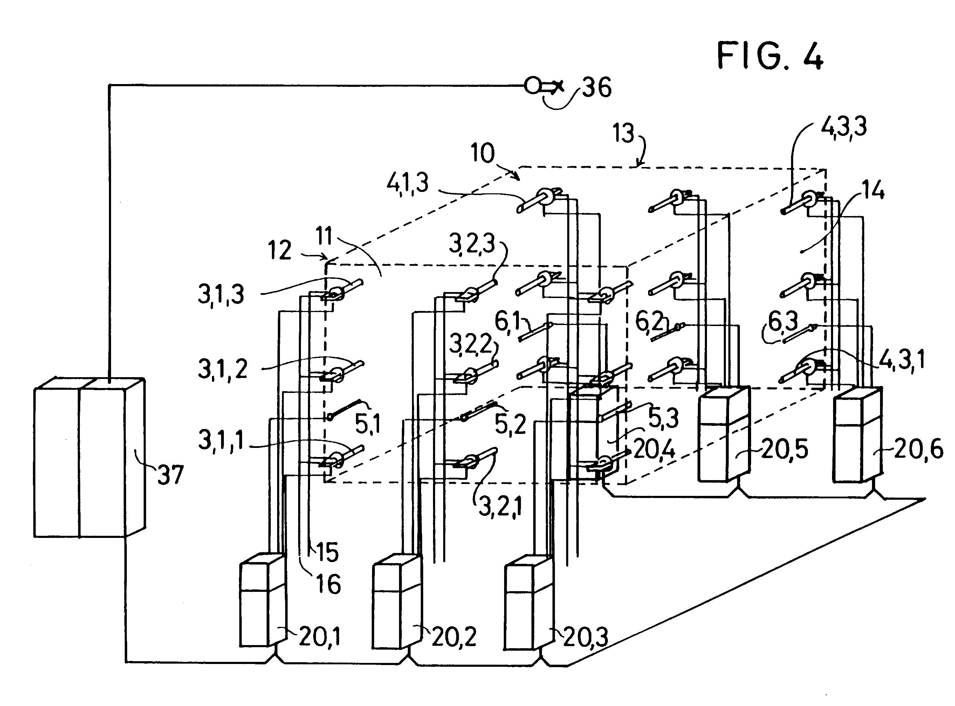

In Figur 3 ist nun eine Anordnung von Düsen 3,1,1; 3,1,2; ... 4,3,1 angedeutet, die auch nochmals in Figur 4 zu sehen ist. Es ist ersichtlich, dass nur ein Teil der Düsen in Figur 3 gezeigt ist. Diese Düsen 3 ... 4 sind nun derart in einander gegenüberliegenden Wänden 11 und 14 angeordnet, die den Strömungsraum 10 umschliessen, dass jeder der zuvor beschriebenen Teil-Strömungsräume 1 ... 2 durch eine Düse 3 ... 4 mit einem Behandlungsmedium versorgt werden kann, wobei das Eindüsen von Behandlungsmedium im wesentlichen fächerförmig derart geschieht, dass über den Strömungsquerschnitt eines jeden Teil-Strömungsraumes ein im wesentlichen gleichförmiger Zufluss an Behandlungsmedium gewährleistet ist.

Gemäss dem in Figur 3 gezeigten Beispiel werden nur diejenigen Düsen aktiviert, in deren zugeordneten Teil-Strömungsräumen 1 ... 2 der Gasstrom innerhalb des Temperaturfensters liegt. Die ein Behandlungsmedium ausstossenden Düsen 3 ... 4 sind in Figur 3 durch Schattierungen der ihnen zugeordneten Flächenelemente angedeutet. Wie aus den Figuren 2 und 3 hervorgeht, wird also jeweils in diejenigen Teil-Strömungsräume Behandlungsmedium eingedüst, in denen für die Entstickung optimale Verhältnisse herrschen. Hierbei können auch die Strömungsgeschwindigkeiten (entsprechend den Pfeillängen in Figur 1) Berücksichtigung finden.

Die Teil-Temperaturen in den Teil-Strömungsräumen 1 ... 2 werden mittels Temperaturfühlern 5,1; 5,2; .. 6,3 bestimmt, die in Figur 4 angedeutet sind. Bei diesem Ausführungsbeispiel der Erfindung ist also jeder Gruppe von übereinanderliegenden Teil-Strömungsräumen 1 ... 2 lediglich ein einziger Temperaturfühler 5 ... 6 zugeordnet. Die Einzeltemperaturen in den Teil-Strömungsräumen 1 ... 2 werden bei diesem Ausführungsbeispiel aus bekannten Strömungsparametern hergeleitet, die der jeweiligen Feuerungsanlage, in welcher die Anordnung eingebaut ist, systemimmanent sind. Weiterhin lassen sich die Einzeltemperaturen auch aufgrund gemessener oder bekannter Strömungsverhältnisse oder durch mehrere Temperaturfühler abtasten. Wesentlich ist jedoch, dass für jeden Teil-Strömungsraum festgestellt wird, ob die dort befindlichen Rauchgase Temperaturen innerhalb oder ausserhalb des Temperaturfensters aufweisen.

Die in Figur 4 gezeigten Düsen 3 ... 4 und Temperaturfühler 5 ... 6 sind jeweils mit Regelgeräten 20,1; 20,2 ... 20,6 verbunden. Diese Regelgeräte 20 wiederum stehen mit einem Gesamtregler 37 in Verbindung, dem ein Ausgangssignal eines Istwert-Fühlers 36 zugeführt wird, der den Stickoxidgehalt und/oder den (Ammoniak-) Schlupf im Abgas misst. Weiterhin sind die Düsen 3 ... 4 mit einer Kühlluftleitung 15 und einer Steuerluftleitung 16 verbunden.

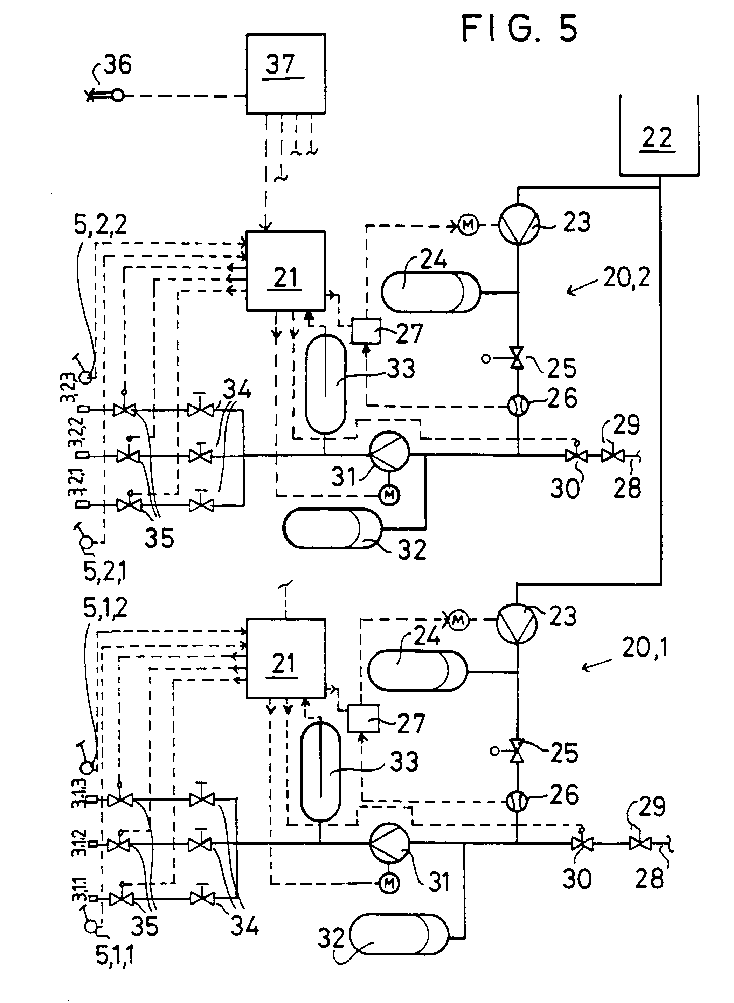

Nachfolgend wird ein Ausführungsbeispiel einer Regelung der in Figur 4 gezeigten Anordnung anhand von Figur 5 näher erläutert. In der Abbildung ist mit der Bezugsziffer 22 ein Wirksubstanzbehälter angedeutet, der zum Beispiel Ammoniakwasser (Salmiakgeist) mit einer vorgegebenen Konzentration oder ein in Wasser gelöstes und zur Entstickung geeignetes Ammoniumsalz enthält. Der Wirksubstanzbehälter 22 steht über Leitungen mit den Regelgeräten 20 in Verbindung, von denen nur zwei (20,1 und 20,2) gezeigt sind. Genauer gesagt steht der Wirksubstanzbehälter 22 mit der Ansaugseite einer Dosierpumpe 23 in Verbindung, die über ein Druckhalteventil 25 und einen dazwischengeschalteten Pulsationsdämpfer 24 Wirksubstanz durch einen Durchflussfühler 26 strömen lässt. Das Ausgangssignal des Durchflussfühlers 26 ist auf einen Dosierregler 27 geführt, der den Elektromotor M der Dosierpumpe 23 entsprechend einem vorgegebenen Sollwert ansteuert.

Die aus dem Durchflussfühler 26 strömende Wirksubstanz wird einem Wasserstrom zugemischt, der aus einer Wasserleitung 28 über ein Absperrventil 29 und ein Wasserdosierventil 30 zur Saugseite einer Hochdruckpumpe 31 unter Zwischenschaltung eines weiteren Pulsationsdämpfers 32 strömt. Der Motor M der Hochdruckpumpe 31 wird durch ein Ausgangssignal eines Reglers. 21 ebenso gesteuert wie das Wasserdosierventil 30. Der Regler 21 stellt ausserdem den Sollwert für den Dosierregler 27 zur Verfügung, sodass durch die entsprechenden Stellwerte des Reglers 21 die Konzentration der eigentlichen aus dem Behälter 22 kommenden Wirksubtanz innerhalb des aus der Wasserleitung 28 kommenden Wassers, das als Trägermedium wirkt, einstellbar ist. Das so eingestellte Behandlungsmedium gelangt zu einem Druckwächter 33, dessen Ausgangssignale ebenfalls dem Regler 21 zugeführt werden, und über Absperrventile 34 und Regelventile 35 schliesslich zu den Düsen 3. Weiterhin sind Temperaturfühler 5,1,1; 5,1,2 ... für jedes der Regelgeräte 20,1 bzw. 20,2 vorgesehen, deren Ausgangssignale den Reglern 21 als Istwerte zugeführt werden. Schliesslich steht noch jeder der Regler 21 mit Stellwert-Leitungen in Verbindung, die aus dem Gesamtregler 37 kommen, welchem die Ausgangssignale des Istwert-Fühlers 36 zugeführt werden. Die Gesamtanordnung ist nun derart getroffen, dass sich die im nachfolgenden beschriebene Funktionsweise ergibt:

Ueber den Istwert-Fühler 36 werden im Abgas der Feuerungsanlage, also in Strömungsrichtung gesehen nach den Düsen 3 ... 4, der Stickoxidgehalt und/oder der Schlupf gemessen. Dieser Messwert bzw. diese beiden Messwerte werden dem Gesamtregler 37 zugeführt, in welchem ein Vergleich mit Sollwerten entsprechend den gewünschten Emmissions-Vorgaben erfolgt. Hieraus werden Stellwerte gewonnen, die der Vielzahl von Reglern 21 zugeführt werden. Gleichzeitig werden in den Teil-Strömungsräumen 1 ... 2 mittels der Temperaturfühler 5 ... 6 die Temperaturen der Rauchgase gemessen bzw. bestimmt. Die Temperaturwerte werden den zu übereinanderliegenden Gruppen von Teil-Strömungsräumen 1 ... 2 zugehörigen Reglern 21 zugeführt. Entsprechend den aus dem Gesamtregler 37 kommenden Stellwerten werden in den Reglern 21 Teil-Stellwerte gebildet, die den Konzentrationen an Wirksubstanz in den Behandlungsmedien entsprechen, welche zur Entstickung in die Teil-Strömungsräume eingedüst werden sollen. Je höher die Strömungsgeschwindigkeit in einem entsprechenden Teil-Strömungsraum 1 ... 2 ist, desto höher wird die Konzentration der Wirksubstanz im Behandlungsmedium eingestellt, wobei die Summe der eingedüsten Wirksubstanzmengen durch den Gesamtregler 37 vorgegeben wird.

Im Dosierregler 27 wird anhand eines Vergleichs zwischen dem aus dem Regler 21 kommenden Sollwert und dem Istwert aus dem Durchflussmessfühler 26 ein Stellwert gebildet, welcher der Dosierpumpe 23 zugeleitet wird. Weiterhin wird das Wasserdosierventil 30 derart vom Regler 21 eingestellt, dass sich an der Saugseite der Hochdruckpumpe 31 ein Mischungsverhältnis aus Wirksubstanz und Wasser eingestellt, wie es durch den Gesamtregler 37 und die oben erwähnten Strömungsparameter vorgegeben ist.

Entsprechend den Temperaturen in den Strömungsräumen 1 ... 2 werden die Regelventile 35 vom Regler 21 eingestellt, sodass Behandlungsmedium nur in diejenigen Teil-Strömungsräume 1 ... 2 eingedüst wird, in welchen die Rauchgastemperatur innerhalb des vorgegebenen Temperaturfensters liegt. Bei hohen Strömungsgeschwindigkeiten kann es sein, dass die in einen Teil-Strömungsraum 1 ... 2 einzudüsende Gesamt-Wirkstoffmenge auch bei maximal möglicher Wirkstoffkonzentration nicht über eine einzige Düse 3 .... 4 geliefert werden kann. In diesem Fall werden mehrere Düsen 3 ... 4 durch Oeffnen der Regelventile 35 benutzt.

Ueber den Druckwächter 33 wird festgestellt, ob sich der Druck am Ausgang der Hochdruckpumpe 31 in einem korrekten Bereich befindet. Beispielsweise dann, wenn trotz Oeffnen eines Regelventils 35 kein Druckabfall am Ausgang der Hochdruckpumpe 31 auftritt, wird ein entsprechendes Signal an den Regler 21 (und ein akustisches oder optisches Störsignal an das Bedienungspersonal) abgegeben, da offensichtlich die dem entsprechenden Regelventil 35 zugeordnete Düse 3 ... 4 verstopft sein muss. Wenn andrerseits der Druckabfall beim Oeffnen eines Regelventils 35 ungewöhnlich hoch ist, kann dadurch festgestellt werden, dass ein Leck an der zugeordneten Düse vorliegt oder diese gänzlich abgebrochen ist.

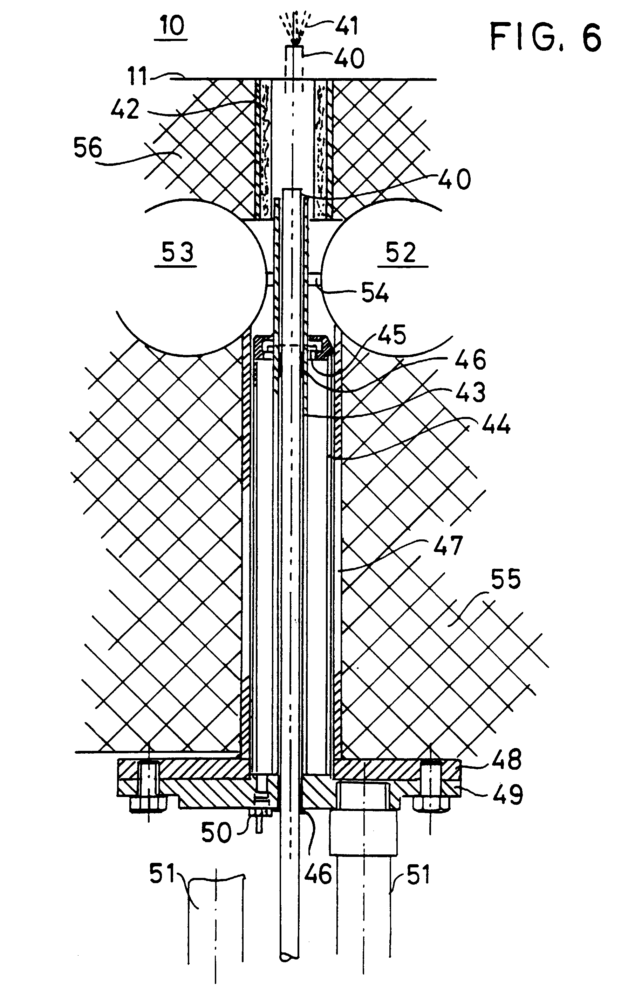

Diejenigen Düsen 3 ... 4, deren zugeordnete Regelventile 35 nicht geöffnet sind, werden aus dem Strömungsraum zurückgezogen. Dies wird nachfolgend anhand der Figur 6 näher beschrieben, aie einen Querschnitt einer Düse im eingebauten Zustand zeigt.

Die in Figur 6 gezeigte, besonders bevorzugte Ausführungsform einer Düse umfasst eine Düsenstange 40, die an ihrem einen Ende eine den Anforderungen entsprechende Düsenöffnung aufweist, über welche ein Sprühfächer 41 gebildet werden kann. Am anderen Ende ist die Düsenstange 40 mit dem dazugehörigen Regelventil 35 zur Zufuhr von Behandlungsmedium verbunden. Die Düsenstange 40 ist in ihrer Längsrichtung verschiebbar in einem inneren Mantelrohr 43 angeordnet und gegenüber diesem durch Dichtungen 46 abgedichtet. Zwischen der Düsenstange 40 und dem inneren Mantelrohr 43 ist ein konzentrischer, ringzylindrischer Kanal gebildet. Das innere Mantelrohr 43 sitzt konzentrisch in einem äusseren Mantelrohr 44, sodass zwischen den beiden Mantelrohren 43 und 44 ebenfalls ein ringzylindrischer Strömungskanal gebildet ist. Dieser Strömungskanal steht über Ueberströmkanäle 45 und Bohrungen im inneren Mantelrohr 43 mit dem ringzylinderischen Strömungskanal in Verbindung, der zwischen der Düsenstange 40 und dem inneren Mantelrohr 43 gebildet ist. In den ringzylindrischen Strömungskanal zwischen dem inneren Mantelrohr 43 und dem äusseren Mantelrohr 44 mündet ein Luftanschluss 50 derart, dass in den Luftanschluss 50 eingeführte Druckluft durch den ringzylindrischen Strömungskanal zwischen dem inneren Mantelrohr 43 und dem äusseren Mantelrohr 44 und dem Ueberströmkanal 45 in den ringzylindrischen Strömungskanal zwischen der Düsenstange 40 und dem inneren Mantelrohr 43 strömen kann. Am Ende des inneren Mantelrohrs 43 tritt die Druckluft aus.

Diese Anordnung ist nun an ihrem dem Düsenöffnungsende gegenüberliegenden Ende mit einem Düsenflansch 49 versehen, der mittels Schrauben auf einem weiteren Flansch 48 gehalten ist. Dieser wiederum ist an einem rohrförmigen Einbaumantel 47 befestigt. Der Einbaumantel 47 sitzt in einer Bohrung in der Wand 11 des Strömungraumes und ragt durch eine Isolierung 55 der Wand 11 bis nahe an die Flossenrohre 52,53. Ein über das Ende des äusseren Mantelrohres 44 und das Ende des Einbaumantels 47 hervorstehendes Ende des inneren Mantelrohrs 43 ist durch eine Bohrung in einem Steg 54 zwischen den Flossenrohren 52,53 hindurchgeführt und ragt (konzentrisch) in ein Keramikrohr 42, welches in den Strömungsraum 10 mündet. Das Keramikrohr 42 ist wiederum bis kurz an die Flossenrohre 52 geführt und sitzt in einer Schamottschicht 56. Der Gesamtaufbau der Wand 11 des Strömungsraumes 10 mit den Flossenrohren 52,53 und dem dazwischenliegenden Steg 54 entspricht einer üblichen Bauweise und ist hier nicht im Detail wiedergegeben.

Die längsverschieblich im inneren Mantelrohr 43 aufgenommene Düsenstange 40 ist über Verstellzylinder 51 mit dem Düsenflansch 49 verbunden, sodass je nach Betätigung der Verstellzylinder 51 die Düsenstange 40 in eine Position zurückgezogen werden kann, in welcher ihr dem Strömungsraum 10 zugewandtes Ende zurückgezogen aus dem Strömungsraum 10 innerhalb des Keramikrohrs 42 liegt, oder aber in den Strömungsraum 10 ragt, wie dies in Figur 6 mit einer unterbrochenen Linie angegeben ist. Das Verschieben der Düse kann jedoch auch mittels eines geeigneten elektromotorischen Antriebs erfolgen.

Im Betrieb der Anordnung wird ständig Druckluft über den Luftanschluss 50 zugeführt, die somit in das Keramikrohr 42 strömt und dadurch sicherstellt, dass die Rauchgase im Strömungsraum 10 nicht ins Innere des Keramikrohrs 42 und auf die Düsenstange 40 gelangen können. Dadurch wird sichergestellt, dass ein Zusetzen der in der Düsenstange 40 vorgesehenen Düse nicht vorkommen kann, auch wenn kein Behandlungsmedium ausgestossen wird. Darüber hinaus wird die Düsenstange 40 durch den ständigen Luftstrom gekühlt. Wenn die Düse hingegen aktiviert wird, die Verstellzylinder 51 also die Düsenstange 40 nach vorne in den Strömungsraum 10 hinausschieben und durch ausströmendes Behandlungsmedium ein Sprühfächer 41 gebildet wird, so wird die Düsenstange 40 einerseits immer noch durch den Luftstrom, andrerseits aber durch das Behandlungsmedium selbst gekühlt. Der Luftsrom stellt sicher, dass auch in diesem Betriebszustand keine in den Rauchgasen enthaltene Partikel die Düse beschädigen können.

Durch die beschriebene Gesamtanordnung, die auch unabhängig vom eingangs beschriebenen Verfahren verwendbar ist, kann sichergestellt werden, dass die Gesamtanordnung zumindest in dem Teilbereich schlankbauend ist, in welchem sie zwischen den Flossenrohren 52,53 hindurchgeführt werden muss. Die Düsenstange 40 ist im Ruhezustand dem Zugriff der heissen und aggressiven Rauchgase entzogen, sodass ein relativ geringer Kühlluftstrom, also ein schlanker Strömungsraum zwischen der Düsenstange 40 und dem inneren Mantelrohr 43, zum Schutz der Düsenstange 40 ausreicht.

Weiterhin ist es durch die erfindungsgemässe Ausbildung der Düse möglich, diese vollständig abzuschalten, sodass man also nicht gezwungen ist, wie bisher ständig Trägermedium (Wasser) ausströmen zu lassen, was den Gesamtwirkungsgrad der Feuerungsanlage bisher reduzierte.

## Patentansprüche

1. Verfahren zum Einbringen eines flüssigen oder gasförmigen Behandlungsmediums, insbesondere eines Entstickungsmediums oder Dioxininhibitors in einen Rauchgasstrom, wobei ein Gesamt-Stellwert für eine Regelung der Zufuhr der Wirksubstanz des Behandlungsmediums über eine Istwert-Messung eines Rauchgasbestandteils und einen Vergleich mit einem Sollwert ermittelt wird, und das Behandlungsmedium über eine Vielzahl von Düsen in den durch einen Strömungsraum (10) strömenden Rauchgasstrom eingedüst wird, wobei der Strömungsraum (10) in eine dreidimensionale Matrix von Teil-Strömungsräumen (1,1,1 ... 2,3,3) unterteilt ist, denen jeweils eine Düse und Messmittel zur Ermittlung der Temperatur in diesem Teil-Strömungsraum zugeordnet sind, wobei für jede einzelne Düse laufend ein individueller Teil-Stellwert des Gesamt-Stellwertes an Wirksubstanz errechnet wird, *dadurch gekennzeichnet,* dass zusätzlich die Strömungsgeschwindigkeit in diesen einzelnen Teilströmungsräumen durch Messmittel (5,1 ... 6,3) direkt gemessen oder indirekt errechnet wird, und dass aufgrund von Temperatur und Strömungsgeschwindigkeit für jeden einzelnen Teil-Strömungsraum (1,1,1 ... 2,3,3) laufend ein individueller Teil-Stellwert von Wirksubstanz errechnet und als Teil eines konstanten Volumenstroms von Behandlungsmedium, das aus einem Trägermedium mit einer individuellen Konzentration von Wirksubstanz besteht, über eine diesem Teil-Strömungsraum zugeordnete einzelne Düse (3,1,1 ... 4,3,3) eingespritzt wird, wobei die Summe der individuellen Teil-Stellwerte den Gesamt-Stellwert an Wirksubstanz nicht überschreitet, und wobei die Düsen (3,1,1 ... 4,3,3) mit Teil-Stellwert Null nicht aktiviert werden, sodass in jeder Spalte der Matrix d.h. in der Rauchgasströmungsrichtung gesehen bloss in einen einzigen Teil-Strömungsraum (1,1,1 ... 2,3,3) eingespritzt wird.

2. Verfahren nach Anspruch 1, dadurch gekennzeichnet, dass nur in jene Teil-Strömungsräume (1,1,1 ... 2,3,3) über die ihnen zugeordneten Düsen (3,1,1 ... 4,3,3) ein Behandlungsmedium eingespritzt wird, in denen die Temperaturmesswerte innerhalb eines vorgegebenen Reaktions-Temperaturfensters liegen, und dass die Düsen (3,1,1 ... 4,3,3) der restlichen Teil-Strömungsräume (1,1,1 ... 2,3,3) überhaupt nicht aktiviert werden, indem sie aus dem Strömungsraum (10) zurückgezogen werden, sodass deren Düsenspitzen dem Rauchgasstrom nicht mehr ausgesetzt sind.

3. Verfahren nach einem der vorhergehenden Ansprüche, dadurch gekennzeichnet, dass die Wirksubstanz für jede einzelne Düse (3,1,1 ... 4,3,3) gesondert gemäss dem errechneten Sollwert dem Tägermedium zugemischt wird und so zum entsprechenden Behandlungsmedium vermischt wird, wonach die Mischung mittels einer Hochdruckpumpe (31) auf einen Druck von mehr als 10 bar gebracht und über die entsprechende aktivierte Düse (3,1,1 ... 4,3,3) eingespritzt wird.

4. Verfahren nach einem der Ansprüche 2 bis 3, dadurch gekennzeichnet, dass die Lage der Temperaturfenster für jeden Teil-Strömungsraum (1,1,1 ... 2,3,3) mittels eines Strahlungsenergie-Detektors ermittelt wird, und dass die Strömungsgeschwindigkeiten mit Messmitteln (5,1 ... 6,3) bestimmt werden, die als Differenz-Temperaturmessfühler ausgebildet sind, aus deren Ausgangssignalen die Strömungsgeschwindigkeiten herleitbar sind.

5. Vorrichtung zur Ausübung des Verfahrens nach Anspruch 1, bei welcher der Rauchgaskanal in wenigstens zwei verschiedenen Querschnittsebenen an mindestens zwei gegenüberliegenden Wänden je mindestens zwei Düsen und Temperaturmessmittel aufweist, sodass der Strömungsraum (10) des Rauchgaskanals in eine dreidimensionale Matrix von Teil-Strömungsräumen (1,1,1 ... 2,3,3) unterteilt ist, die Rauchgasströmungsrichtung gesehen wenigstens auf zwei Ebenen nacheinanderliegende Gruppen von Teil-Strömungsräumen (1 ... 2) einschliesst, in denen je die Rauchgastemperatur messbar ist, wobei sämtliche Teil-Strömungsräume (1,1,1 ... 2,3,3) einer Ebene mindestens an eine Rauchgaskanal-Wand (11-14) angrenzen und etwa gleichgross sind, *dadurch gekennzeichnet,* dass für jeden Teil-Strömungsraum (1,1,1 ... 2,3,3) in der an ihn angrenzenden Rauchgaskanal-Wand (11-14) eine aus dem Rauchgaskanal herausziehbare Düse (3,1,1 ... 4,3,3) und Messmittel (5,1 ... 6,3) zur direkten Messung wenigstens der Temperatur und zur direkten oder indirekten Ermittlung der Strömungsgeschwindigkeit in diesem Teil-Strömungsraum (1,1,1 ... 2,3,3) angebracht sind, dass mindestens ein Regelgerät (20,1 ... 20,6) vorhanden ist, mit dem in Abhängigkeit einerseits vom Gesamtstell-Wert, der aus einer Istwert-Messung eines Rauchgasbestandteils und einem Vergleich mit einem Sollwert ermittelt wird, und andrerseits aus den Signalen der Messmittel (5,1 ... 6,3) die Teil-Behandlungsmedienströme für die einzelnen Düsen (3,1,1 ... 4,3,3) errechenbar und steuerbar sind, derart, dass die aktivierten Düsen (3,1,1 ... 4,3,3) in den Rauchgaskanal ragen und alle mit demselben konstanten Volumenstrom einspritzen, jedoch mit einer individuellen Konzentration von Wirksubstanz im Trägermedium, und die deaktivierten Düsen aus dem Rauchgaskanal herausgezogen sind, sodass in jeder Spalte der Matrix , d.h. in der Rauchgasströmungsrichtung gesehen, bloss in einen einzigen Teil-Strömungsraum (1,1,1 ... 2,3,3) eingespritzt wird.

6. Vorrichtung nach Anspruch 5, dadurch gekennzeichnet, dass für jede Reihe der Düsen (3,1,1 ... 4,3,3) von nacheinanderliegenden Teil-Strömungsräumen (1,1,1 ... 2,3,3) eine gesonderte Hochdruckpumpe (31) vorhanden ist, die über eine Behandlungsmedium-Ausgangsleitung mit den dem Regelgerät (20,1 ... 20,6) zugeordneten Düsen (3,1,1 ... 4,3,3) verbunden ist und eine Eingangsleitung aufweist, die mit einer Druckwasserquelle als Trägermedium in Verbindung steht, und in welche eine Zumischleitung mündet, der eine Wirksubstanz mittels einer Dosierpumpe (23) zuführbar ist, wobei mit der Hochdruckpumpe (31) das zu fördernde Behandlungsmedium in zuvor beigemischter Konzentration der Wirksubstanz in einem konstanten Volumenstrom zur aktivierten Düse (3,1,1 ... 4,3,3) der Reihe pumpbar ist.

7. Vorrichtung nach einem der Ansprüche 5 bis 6, dadurch gekennzeichnet, dass die Messmittel (5,1 ... 6,3) als Differenz-Temperaturmessfühler ausgebildet sind, aus deren Ausgangssignalen die Strömungsgeschwindigkeiten herleitbar sind, und dass mindestens ein Strahlungsenergie-Detektor vorhanden ist, mittels dessen die Lage der Temperaturfenster für jeden Teil-Strömungsraum (1,1,1 ... 2,3,3) feststellbar ist.

8. Vorrichtung nach einem der Ansprüche 5 bis 6, dadurch gekennzeichnet, dass die Düsen (3,1,1 ... 4,3,3) derart verschiebbar ausgebildet in einer Wand (11) des Strömungsraumes (10) gehalten sind, dass sie von einer Deaktivierungsposition ausserhalb des Rauchgasstromes im Strömungsraum (10) mittels eines Verstellzylinders (51) oder elektromotorisch angetrieben in eine Aktivierungsposition innerhalb des Rauchgasstroms im Strömungsraum (10) verschiebbar sind und umgekehrt.

9. Vorrichtung nach Anspruch 8, dadurch gekennzeichnet, dass jede der Düsen (3,1,1 ... 4,3,3) eine Düsenstange (40) aufweist, die durch eine Betätigungseinrichtung (51) verschiebbar in einem inneren Mantelrohr (43) konzentrisch gehalten ist, wobei zwischen dem inneren Mantelrohr (43) und der Düsenstange (40) ein ringzylinderischer Strömungsraum gebildet ist, durch welchen Druckluft förderbar ist, wobei das innere Mantelrohr (43) eine Länge aufweist, die derart bemessen ist, dass bei zurückgezogenem Düsenrohr (40) dieses mit dem äusseren Mantelrohr (43) abschliesst und versenkt in einer Wand (11) des Strömungraums (10) angeordnet ist.

## Claims

1. A method for introducing a liquid or a gaseous treatment medium, in particular of a nitrogen oxide removal medium or dioxin inhibitor, into a flue gas flow, wherein a total adjustment value for a control of the feeding of the active substance of the treatment medium is generated by means of an actual value measurement of a flue gas component and a comparison with a set value, and the treatment medium is injected through a multitude of nozzles into the flue gas stream flowing through a flow chamber (10), whereby the flow chamber (10) is divided into a three-dimensional matrix of partial flow chambers (1.1.1 ... 2.3.3), to which is assigned respectively a nozzle and measuring means for detecting the temperature in this partial flow chamber, and an individual partial adjustment value for the active substance is continuously calculated for each individual nozzle, *characterized in that,* additionally, the flow speed in those partial flow chambers is being measured directly by measuring means (5,1 ... 6,3) or calculated indirectly, and that based upon the temperature and flow speed for each single partial flow chamber (1,1,1 ... 2,3,3), an individual partial adjustment value of active substance is continuously being calculated and is injected as a part of a constant volume flow of treatment medium which consists of a carrier medium with an individual concentration of active substance, through a single nozzle (3,1,1 ... 4,3,3 which is assigned to the particular partial flow chamber, wherein the total of the individual partial adjustment values does not exceed the total adjustment value of the active substance, and wherein the nozzles (3.1.1 ... 4.3.3.) with a partial adjustment value of zero are not activated, so that in each column of the matrix, that is viewed in the flow direction of the flue gas flow, the injection takes place only in a single partial flow chamber (1.1.1 ... 2.3.3).

2. A method in accordance with claim 1, characterized in that a treatment medium is injected into those partial flow chambers (1.1.1 ... 2.3.3) via their assigned nozzles (3.1.1 ... 4.3.3), in which the measured temperature values lie within a predetermined reaction temperature window, and that the nozzles (3.1.1 ... 4.3.3) of the remaining partial flow chambers (1.1.1 ... 2.3.3) are not activated at all in that they are retracted out of the flow chamber (10), so that their nozzle tips are no longer exposed to the flue gas flow.

3. A method in accordance with one of the preceding claims, characterized in that the active substance is admixed separately for each individual nozzle (3.1.1 ... 4.3.3) in accordance with the calculated set value of the carrier medium and in this way is mixed to form the appropriate treatment medium, after which the mixture is brought to a pressure of more than 10 bar by means of a high pressure pump (31) and is injected via the appropriately activated nozzle (3.1.1 ... 4.3.3).

4. A method in accordance with one of claims 2 to 4, characterized in that the position of the temperature windows for each partial flow chamber (1.1.1 ... 2.3.3) is determined by means of a radiation energy detector, and that the flow speeds are determined with measuring means (5.1 ... 6.3), which are embodied as difference temperature measuring sensors, from whose output signals the flow speeds can be derived.

5. A device for executing the method in accordance with claim 1, characterized in that the flue gas channel (10) is divided into a three-dimensional matrix of partial flow chambers (1.1.1 ... 2.3.3) which at least includes groups of partial flow chambers (1 ... 2) located one behind the other on two levels when viewed in the flow direction, wherein all partial flow chambers (1.1.1 ... 2.3.3) of one level adjoin a flue gas channel wall (11 to 14) and are approximately of the same size, and that in the partial flow chamber (1.1.1 ... 2.3.3) a nozzle (3.1.1 ... 4.3.3) and measuring means (5.1 ... 6.3) for detecting at least the temperature and the flow speed for each partial flow chamber (1.1.1 ... 2.3.3) are disposed in the flue gas channel wall (11 to 14) adjoining it, that at least one control device (20.1 ... 20.6) is provided, by means of which the partial treatment medium flows for the individual nozzles (3.1.1 ... 4.3.3) can be calculated and controlled as a function of, on the one hand, the total adjustment value, which is generated from an actual value measurement of a flue gas component and a comparison with a set value and, on the other hand, from the signals of the measuring means (5.1 ... 6.3), in such a way, that the activated nozzles (3.1.1 ... 4.3.3) all perform injection with the same constant volume stream, but with an individual concentration of active substance in the carrier medium.

6. A device in accordance with claim 6, characterized in that for each row of nozzles (3.1.1 ... 4.3.3) of partial flow chambers (1.1.1 ... 2.3.3) placed one after the other, a separate high pressure pump (31) is provided, which is connected via a treatment medium output line with the nozzles (3.1.1 ... 4.3.3) assigned to the control device (20.1 ... 20.6) and has an input line which is connected with a pressure water source and terminates in an admixing line which can be provided with an active substance by means of a metering pump (23), wherein the treatment medium to be conveyed can be pumped by means of the high pressure pump (31) in a previously admixed concentration of the active substance to the activated nozzle (3.1.1 ... 4.3.3) of the row in a constant volume flow.

7. A device in accordance with one of claims 6 to 7, characterized in that the measuring means (5.1 ... 6.3) are designed as difference temperature measuring sensors, from whose output signals the flow speeds can be derived, and that at least one radiation energy detector is provided, by means of which the position of the temperature windows can be detected for each partial flow chamber (1.1.1 ... 2.3.3).

8. A device in accordance with one of claims 6 to 7, characterized in that the nozzles (3.1.1 ... 4.3.3), embodied to be displaceable, are held in a wall (11) of the flow chamber (10) in such a way that they can be displaced from a deactivation position outside of the flue gas flow in the flow chamber (10) by means of an adjustment cylinder (51), or driven by an electric motor, into an activation position inside the flue gas flow in the flow chamber, and vice versa.

9. A device in accordance with claim 9, characterized in that each of the nozzles (3.1.1 ... 4.3.3) has a nozzle rod (40), which is displaceably held by an actuation device (51) concentrically in an interior jacket tube (43), wherein an annular-cylindrical flow chamber is formed between the interior jacket tube (43) and the nozzle rod (40), through which compressed air can be conveyed, wherein the interior jacket tube (43) is of a length which is such that when the nozzle tube (40) is retracted, it ends flush with the exterior jacket tube (43) and is disposed retracted in a wall (11) of the flow chamber (10).

## Revendications

1. Procédé pour introduire dans un courant de gaz de combustion un fluide liquide ou gazeux de traitement, en particulier un fluide de dénitration ou un inhibiteur de dioxine, cependant qu'une valeur d'ensemble de régulation est déterminée pour une régulation de l'alimentation en substance active du fluide de traitement par l'intermédiaire d'une mesure de la valeur réelle d'un constituant du gaz de combustion et d'une comparaison avec une valeur de consigne, et que le fluide de traitement est injecté par un grand nombre d'injecteurs dans le courant du gaz de combustion s'écoulant à travers une zone d'écoulement (10), cette zone d'écoulement (10) étant subdivisée en une matrice tridimensionnelle de zones partielles d'écoulement (1,1,1 à 2,3,3), à chacune desquelles il est attribué un injecteur et des moyens de mesure pour déterminer la température dans cette zone partielle correspondante d'écoulement, une valeur partielle individuelle par rapport à la valeur d'ensemble - de régulation - de la substance active étant calculée continuellement pour chaque injecteur, caractérisé en ce que, de plus, la vitesse d'écoulement dans ces zones individuelles partielles d'écoulement est mesurée directement par des moyens de mesure (5,1 à 6,3) ou calculée indirectement et que, sur la base de la température et de la vitesse d'écoulement, une valeur de régulation partielle individuelle de la substance active est calculée continuellement pour chaque zone partielle individuelle d'écoulement (1,1,1 à 2,3,3) et que cette valeur, en tant que partie d'un courant volumique constant de fluide de traitement, constitué par un fluide porteur à concentration individuelle de la substance active, est injectée par un injecteur individuel (3,1,1 à 4,3,3) attribué à cette zone de courant partielle, la somme des valeurs partielles individuelles de régulation ne dépassant pas la valeur d'ensemble - de régulation - de la substance active, et les injecteurs (3,1,1 à 4,3,3), de valeur partielle - de régulation - zéro, n'étant pas activés, de sorte que dans chaque colonne de la matrice, c'est-à-dire en regardant dans le sens du courant du gaz de combustion, l'injection n'est réalisée que dans une seule zone de courant partielle (1,1,1 à 2,3,3).

2. Procédé suivant la revendication 1, caractérisé en ce qu'un fluide de traitement est injecté seulement dans les zones partielles de courant (1,1,1 à 2,3,3) (par les injecteurs (3,1,1 à 4,3,3) attribués à celles-ci), dans lesquelles les températures mesurées sont à l'intérieur d'une plage prédéterminée de la température de réaction et que les injecteurs (3,1,1 à 4,3,3) des zones partielles restantes de courant (1,1,1 à 2,3,3) ne sont absolument pas activés, en ce qu'ils sont retirés de la zone du courant (10), de sorte les pointes de ces injecteurs ne sont plus soumises au courant des gaz de combustion.

3. Procédé suivant une des revendications précédentes, caractérisé en ce que la substance active est ajoutée et mélangée au fluide porteur pour chaque injecteur individuel (3,1,1 à 4,3,3) séparément suivant la valeur de consigne calculée et mélangée ainsi pour former le fluide de traitement correspondant, après quoi le mélange est porté, au moyen d'une pompe à haute pression (31), à une pression de plus de 10 bars et injecté par l'injecteur correspondant activé (3,1,1 à 3,3,3).

4. Procédé suivant une des revendications 2 à 3, caractérisé en ce que la position des plages de température est déterminée pour chaque zone partielle d'écoulement (1,1,1 à 2,3,3) au moyen d'un détecteur d'énergie de rayonnement et que les vitesses de courant sont déterminées par des moyens de mesure (5,1 à 6,3), réalisés sous forme de capteurs différentiels de températures, dont les signaux de sortie permettent de déduire les vitesses de courant.

5. Dispositif pour la réalisation du procédé suivant la revendication 1, dans lequel, dans au moins deux plans transversaux et sur au moins deux parois opposées, la gaine du gaz de combustion présente chaque fois au moins deux injecteurs et des moyens de mesure de température, de sorte que la zone d'écoulement (10) de la gaine du gaz de combustion est divisée en une matrice tridimensionnelle de zones partielles d'écoulement (1,1,1 à 2,3,3), qui, en regardant dans le sens d'écoulement du gaz de combustion, comprend, sur au moins deux plans, des groupes successifs de zones partielles d'écoulement (1 à 2), où la température du gaz de combustion peut être chaque fois mesurée, toutes les zones partielles d'écoulement (1,1,1 à 2,3,3) d'un plan étant attenantes à une paroi (11 à 14) de la gaine du gaz de combustion et de taille approximativement égale, caractérisé en ce que, pour chaque zone partielle d'écoulement (1,1,1 à 2,3,3) et dans la paroi (11 à 14) - attenante à elle - de la gaine de gaz il est disposé un injecteur (3,1,1 à 4,3,3) pouvant être retiré de la gaine du gaz ainsi que des moyens de mesure (5,1 à 6,3), destinés à la mesure directe d'au moins la température et à la détermination directe ou indirecte de la vitesse d'écoulement dans cette zone partielle d'écoulement (1,1,1 à 2,3,3), que par ailleurs il existe au moins un régulateur (20,1 à 20,6), avec lequel il est possible de calculer et de commander les courants de traitement partiels pour les différents injecteurs (3,1,1 à 4,3,3), en fonction d'une part de la valeur totale de régulation, obtenue par une mesure d'une valeur réelle d'un constituant de gaz de combustion et d'une comparaison avec une valeur de consigne, et d'autre part des signaux des moyens de mesure (5,1 à 6,3), de sorte que les injecteurs activés (3,1,1 à 4,3,3) dépassent dans la gaine du gaz et injectent tous avec le même courant volumique constant, mais avec une concentration individuelle de substance active dans le fluide porteur et que les injecteurs désactivés sont retirés de la gaine du gaz de combustion, de sorte que dans chaque colonne de la matrice, c'est-à-dire en regardant dans le sens d'écoulement du gaz, l'injection ne se produit que dans une seule zone partielle d'écoulement (1,1,1 à 2,3,3).

6. Dispositif suivant la revendication 5, caractérisé en ce que pour chaque série des injecteurs (3,1,1 à 4,3,3) de zones partielles successives d'écoulement (1,1,1 à 2,3,3) il existe une pompe à haute pression séparée (31), qui est reliée par une conduite de sortie du fluide de traitement aux injecteurs (3,1,1 à 4,3,3) attribués au régulateur (20,1 à 20,6) et comporte une conduite d'entrée, reliée à une source d'eau sous pression constituant un fluide porteur, et dans laquelle débouche une conduite d'alimentation et de mélange, pouvant recevoir une substance active au moyen d'une pompe doseuse (23), le fluide de traitement à refouler pouvant être pompé au moyen de la pompe à haute pression (31) vers l'injecteur activé (3,1,1 à 4,3,3) de la série et ceci à une concentration auparavant additionnée et mélangée de la substance active, dans un courant volumique constant.

7. Dispositif suivant une des revendications 5 à 6, caractérisée en ce que les moyens de mesure (5,1 à 6,3) sont réalisés sous forme de capteurs différentiels de température, dont les signaux de sortie permettent de déduire les vitesses d'écoulement et qu'il existe au moins un détecteur d'énergie de rayonnement, au moyen duquel la position des plages de température peut être constatée pour chaque zone partielle d'écoulement (1,1,1 à 2,3,3).

8. Dispositif suivant une des revendications 5 à 6, caractérisé en ce que les injecteurs (3,1,1 à 4,3,3) sont disposés mobiles dans une paroi (11) de la zone d'écoulement (10) de telle sorte qu'ils peuvent être déplacés d'une position de désactivation à l'extérieur du courant de gaz de combustion, dans la zone d'écoulement (10), au moyen d'un vérin (51) ou d'un moteur électrique, pour aller dans une position d'activation, à l'intérieur du courant de gaz, dans la zone d'écoulement (10), et inversement.

9. Dispositif suivant la revendication 8, caractérisé en ce que chacun des injecteurs (3,1,1 à 4,3,3) comporte une tige (40), qui est logée mobile concentriquement dans une chemise tubulaire intérieure (43), sous la commande d'un dispositif d'actionnement (51), une zone d'écoulement tubulaire, dans laquelle de l'air comprimé peut être refoulé, étant formée entre la chemise tubulaire intérieure (43) et la tige d'injecteur (40), cependant que la chemise tubulaire intérieure (43) présente une longueur telle que, quand le tube d'injecteur (40) est retiré, il affleure avec la chemise tubulaire extérieure (43) et que ce tube d'injecteur (40) est noyé dans une paroi (11) de la zone d'écoulement (10).
